# EUROPEAN PATENT SPECIFICATION

(11) **EP 3 585 988 B1**
(45) Date of publication and mention of the grant of the patent: **02.12.2020**
(21) Application number: 18705941.5
(22) Date of filing: 23.02.2018
(51) Int. Cl.: F01N 3/05, F01N 3/34, F01N 3/20, F01N 3/04, F01N 1/14

(54) **DEVICE AND METHOD FOR CLEANING SMOKE REMOVAL EQUIPMENT, IN PARTICULAR A DENITRIFICATION CATALYST OR A HEAT EXCHANGER**
VORRICHTUNG UND VERFAHREN ZUR REINIGUNG VON RAUCHABZUGSAUSRÜSTUNGEN, INSBESONDERE EINES DENITRIFIKATIONSKATALYSATORS ODER EINES WÄRMETAUSCHERS
DISPOSITIF ET PROCÉDÉ DE NETTOYAGE D'UN ÉQUIPEMENT DE DÉSENFUMAGE, EN PARTICULIER UN CATALYSEUR DE DÉNITRIFICATION OU UN ÉCHANGEUR DE CHALEUR

(30) Priority: 24.02.2017 FR 1751488
(43) Date of publication of application: 01.01.2020
(73) Proprietor: LAB SA, 69007 Lyon (FR); CNIM ENVIRONNEMENT & ENERGIE SERVICES, 75008 Paris (FR)
(72) Inventor: SIRET, Bernard, 69200 Venissieux (FR); TABARIES, Frank, 83430 Saint Mandrier sur Mer (FR)
(74) Representative: Lavoix
(86) International application number: PCT/EP2018/054461
(87) International publication number: WO 2018/154031

(56) References cited:
- EP-A1- 3 088 067
- WO-A1-2014/166076
- DE-A1- 2 725 045

## Description

The present invention relates to a device and a method for cleaning smoke removal equipment.

Many industrial processes produce smoke that is discharged in harmful compounds and that must be purified. For example, the elimination of nitrogen oxides, responsible for acid rain, must be provided. Selective catalytic reduction nitrification, called "deNOx SCR", is a common and effective method for removing nitrogen oxides from smoke. This method is particularly used to denitrify smoke resulting from combustion processes, for example when fossil fuels are burned to produce energy, or incineration processes, or even many industrial processes, such as those implemented in cement plants.

However, the smoke to be treated almost always contains dust, with more or less high loads. In addition, under certain temperature conditions, and in the presence of sulfur, solid compounds, such as ammonium sulfite or ammonium hydrogen sulfite and ammonium sulfate or ammonium hydrogen sulfate, can form in the smoke to be treated. The catalysts used to denitrify this smoke often being in the form of extruded monoliths, while having channels whose characteristic dimension typically varies between 2 and 10 mm, this dust and other solid compounds can be deposited on the edges of the ends of the channels of the catalysts, or even penetrate these channels, and be deposited therein, which results in dirtying, and eventually blocking of the catalyst.

Furthermore, the raw smoke, i.e., as emitted by the industrial processes, is, in addition to being filled with dust, often hot. Energy integration requires recovering thermal energy: to that end, heat exchangers, also called economizers or recuperators, are placed on the path of the smoke. Since the smoke conveys dust and other solid compounds, these exchangers are also subject to dirtying and must therefore be cleaned.

It will thus be understood that various pieces of smoke removal equipment, like those mentioned thus far, need to be cleaned regularly to rid them of dust and other similar solid compounds, which tend to accumulate on the surface of these pieces of smoke removal equipment. The concept of cleaning considered here thus has a broad meaning, in particular encompassing unclogging, blowing, unsticking, etc.

Regarding catalysts, the most common cleaning technique consists of directing an air jet toward the catalyst, while orienting this air jet in the axis of the channels of the catalyst to unclog these channels. WO 2014/166076 A1 outlines an example of a cleaning device of this type. Most often, since the smoke to be treated circulates vertically, these unclogging jets are also oriented vertically. These unclogging jets are created by a tank, which is kept under pressure and which is coupled by a valve either to a tube with an open end, in a manner very similar to the unclogging device for bag filters, or to parallel feed bars that each emit, at several points along their length, jets oriented perpendicular to the face of the catalyst parallel to which these ramps extend. This cleaning technique is effective, but if the catalyst channels are oriented vertically, which is typically the case, the unclogging of the upper face of the catalyst by an air jet oriented downward may result in causing a heap of dust to collapse on the opening of the channel, clearly resulting in immediate blockage of this channel. In other words, the unclogging then creates a situation worse than that which it is trying to resolve.

It has also been proposed to unclog the channels of catalysts using air jets, sent orthogonally to the axis of the channels, flush with the corresponding face of the catalyst. EP 3 088 067 illustrates this approach. However, since the stream of smoke to be treated is not interrupted during the application of these air jets, the smoke circulating through the catalyst tends to strongly deflect these air jets, even when the latter are emitted with a speed exceeding several tens of meters per second. The effective range of these blower jets then does not exceed several tens of centimeters, which is insufficient in light of the dimensions of typical catalysts.

The unclogging of the denitrification catalysts can also be undertaken with acoustic horns, which, like fog horns, emit audio vibrations at a low frequency and high intensity, which will cause the catalyst and the dust to vibrate in order to unstick the latter from the catalyst. This technique can also be combined with the previous ones and is commonly used in large energy production plants. However, it will be understood that this technique is very noisy, since sound levels exceeding 100 dBA are required. Furthermore, this technique is not always effective, in particular when dealing with sticky dust.

Heat exchangers can be cleaned through sweeping, sandblasting or micro-explosions. However, sweeping disrupts the normal operation of the installation within which the exchanger is integrated, sandblasting leads to rapid wear of the exchanger, and micro-explosions may damage the exchanger.

The aim of the present invention is therefore to propose a device and a method for cleaning smoke removal equipment that is effective, cost-effective and easy to implement.

To that end, the invention relates to a device for cleaning smoke removal equipment having a globally planar free surface and through which smoke to be cleaned flows during the use of the smoke removal equipment, this device being as defined in claim 1.

The invention also relates to a method for cleaning smoke removal equipment, as defined in claim 10.

One of the ideas at the base of the invention is to send, onto the free surface of smoke removal equipment, fluid jets that are greatly inclined relative to this free surface, but without being flush with respect to the latter. To that end, the invention provides for arranging, across from the free surface of the smoke removal equipment to be cleaned, a series of fluid feed bars, globally parallel to one another: from these bars, jets of fluid are emitted with an angle comprised between 15 and 35° relative to the free surface. The large tangential component of the fluid jets relative to the plane of the free surface of the smoke removal equipment makes it possible both to prevent the dust and other solid deposits present on this free surface from being forced toward the inside of the smoke removal equipment, and to induce rotary fluid movements in the planes respectively formed by the respective axes of the jets and the normal to the free surface of the smoke removal equipment, which helps suspend the particles unstuck from the free surface. Advantageously, for each pair of adjacent bars, jets emitted by a first bar of the pair toward the second bar of the pair, and jets emitted by the second bar toward the first bar, are offset from one another in the longitudinal direction of the bars, so as to induce rotary fluid cells having a component in a plane parallel to the free surface of the smoke removal equipment: the suspension of the dust unstuck from the free surface is thus reinforced. In all cases, the invention makes it possible, owing to its compact and cost-effective device, to effectively clear the entire free surface of the smoke removal equipment of dust and other solid deposits.

Additional advantageous features of the cleaning device and/or method according to the invention are specified in the other claims.

The invention will be better understood upon reading the following description, provided solely as an example and done in reference to the drawings, in which:
- figure 1 is a schematic perspective view of a device according to the invention, used on smoke removal equipment;
- figure 2 is a partial schematic sectional view in plane II of figure 1;
- figure 3 is an elevation view along arrow III of figure 2; and
- figure 4 is a schematic perspective view of part of the device of figure 1.

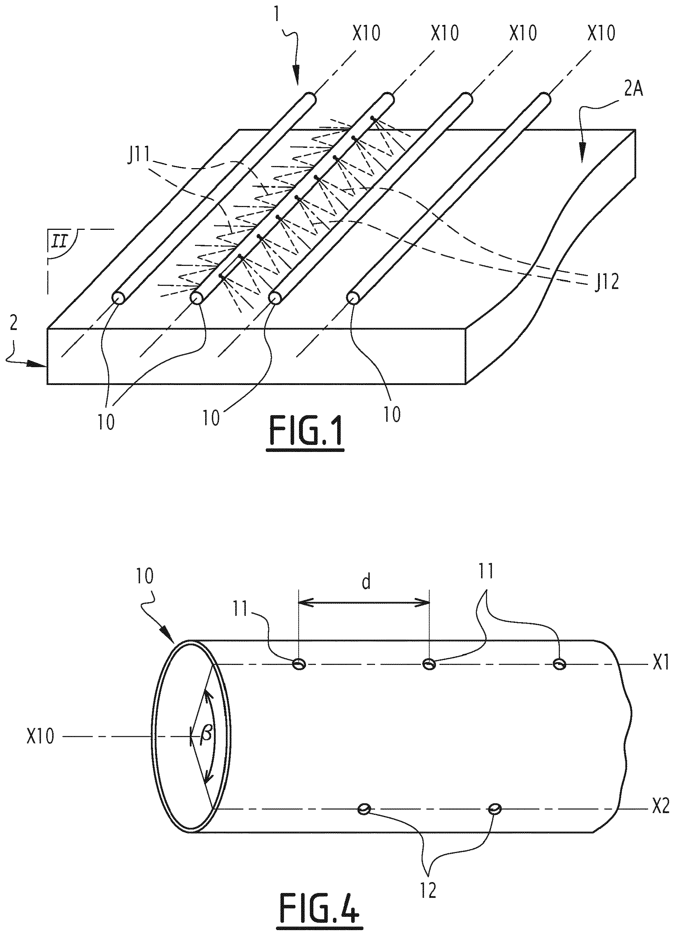

Figures 1 to 4 show a device 1 making it possible to clean a piece of equipment 2 used to remove smoke. The cleaning device 1 is applicable to any smoke removal equipment 2 having a free surface 2A that is globally planar and through which the smoke to be cleaned flows during the use of the equipment. Depending on the circulation direction of the smoke through the smoke removal equipment 2, the free surface 2A indifferently constitutes an input surface or an output surface for the smoke.

As one non-limiting example, the smoke removal equipment 2 is a smoke denitrification catalyst, used to denitrify the smoke through a so-called SCR (Selective Catalytic Reduction) process. Such a catalyst, which includes one or several beds, has a structure with channels: these channels, which each have a transverse dimension of just several millimeters, typically comprised between 2 and 10 mm, connect the input surface and the output surface of the catalyst to one another. Thus, even if each of these free surfaces, namely the input surface and the output surface, of the catalyst does not correspond to a flat face that is solid due to the presence of respective outlets of the channels, this free surface can be considered, on the macroscopic level of the catalyst, to be substantially flat.

As an alternative non-limiting example, the smoke removal equipment 2 is a heat exchanger, also called economizer or recuperator, that makes it possible to recover the calories from the smoke, in particular to heat or superheat water. Such an exchanger is generally made up of transverse tubes, in which a heat transfer fluid circulates and between which the smoke flows. Considered jointly, these transverse tubes thus have an input surface and an output surface for the smoke, which respectively constitute free surfaces of the exchanger and which, despite the presence of the transverse tubes, can each be considered planar on the macroscopic level of the exchanger.

Other alternative and non-limiting examples of the smoke removal equipment 2 can be considered, such as screens, perforated plates, etc. In all cases, the smoke removal equipment 2 is used in a smoke treatment chain, placed between the source that produces this smoke and the chimney that releases it into the atmosphere.

Furthermore, the spatial orientation of the free surface 2A of the smoke removal equipment 2 is irrelevant. In the example considered in the figures, the free surface 2A is substantially horizontal, but any other orientation can be considered.

Furthermore, as previously indicated, the free surface 2A provided to be cleaned by the device 1 corresponds indifferently to the input surface or the output surface of the equipment 2, depending on the circulation direction of the smoke through this equipment: in other words, the device 1 is placed indifferently upstream or downstream, in the circulation direction of the smoke, from the free surface 2A of the smoke removal equipment, depending on the side of the equipment that one wishes to clean by implementing the device 1. Of course, as an alternative that is not shown, two devices 1 may simultaneously be placed upstream and downstream, respectively, from the smoke removal equipment 2, in order to clean the free input surface as well as the free output surface of this equipment.

As shown by figures 1 to 3, the device 1 includes a series of bars 10 that dispense a pressurized fluid when these bars are supplied with the latter. The means supplying the ramps 10 with the pressurized fluid are known in themselves, such that they are not shown in the figures or described in further detail below, with the understanding that the embodiment of these supply means is not limiting.

One preferred embodiment of the bars 10 is illustrated in figure 4: each bar 10 is thus made up of a tubular wall, in other words a tubing, having a circular section whose inner diameter is for example comprised between 40 and 100 mm. Of course, other embodiments can be considered for the bars 10.

Irrespective of the embodiment of the bars 10, each of them extends lengthwise around a central axis X10, the bars extending substantially parallel to one another. Transversely, or even perpendicular, to the longitudinal direction, the bars 10 are distributed one after the other, advantageously substantially regularly. During use, the bars 10 are provided to be arranged across from the free surface 2A of the smoke removal equipment 2 such that their respective axis X10 is located at a distance D from this free surface, comprised between 120 and 400 mm, preferably between 150 and 250 mm, this distance D being measured orthogonally to the free surface 2A.

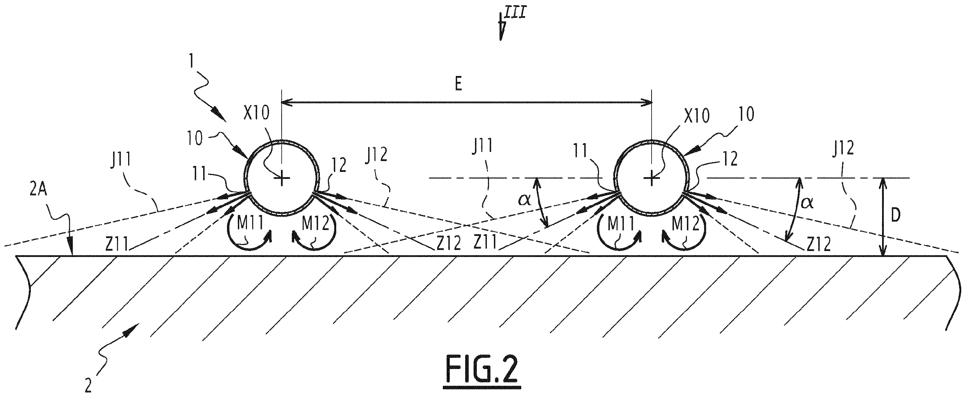

As clearly shown in figures 2 and 4, each bar 10 is provided with elements 11 and 12 distributed along the length of the bar: during use, i.e., when the bar 10 is supplied with pressurized fluid, each of these elements 11 and 12 emits a fluid jet J11, J12 that is oriented toward the free surface 2A of the smoke removal equipment 2 in order to clean this free surface 2A, typically by blowing and/or unclogging. As illustrated schematically by figures 1 to 3, each of these fluid jets J11, J12 is centered on an axis Z11, Z12. The fluid jets J11 and J12 in particular have a conical or pseudo-conical shape, the central axis of which corresponds to the axes Z11 and Z12. As shown in figure 2, the respective axes Z11 and Z12 of the fluid jets J11 and J12 are inclined relative to the free surface 2A of the smoke removal equipment 2, each forming, relative to this free surface 2A, an angle α comprised between 15 and 35°. In this way, during use, each of the elements 11 and 12 orients its fluid jet J11, J12 along the angle α.

According to one practical and cost-effective embodiment, illustrated by figure 4, each of the elements 11 and 12 is a hole, which is delimited through the tubular wall of the bar 10 and which has a diameter for example comprised between 6 and 10 mm. Of course, embodiments other than such through holes can be considered for the elements 11 and 12: for example, tubes, such as straight tubes or Venturi tubes, are possible. More generally, the embodiment of the elements 11 and 12 is not limiting with respect to the invention, as long as it allows the fluid jets J11 and J12 to be oriented along the angle α.

According to one advantageous optional arrangement, which is implemented in the embodiment considered in the figures, the elements 11 and 12 of each bar are respectively divided into two groups of elements, depending on the lateral side on which these elements emit the fluid jets J11 and J12. More specifically, as clearly shown in figure 4, the elements 11 are aligned and distributed over a first generating line X1 of the bar 10, with the understanding that a generating line here refers to a geometric straight line that runs along the wall of the bar 10 parallel to its central axis X10. The elements 12 are aligned and distributed over a second generating line X2 of the bar 10, while being offset, in the longitudinal direction of the bar, with respect to the elements 11. According to one preferred arrangement, the elements 11 are distributed on the generating line X1 regularly and the elements 12 are distributed on the generating line X2, also regularly, with a same pitch d: the offset between the elements 11 and the elements 12 is then advantageously equal to half this pitch d, which, as a dimensional example, is comprised between 250 and 600 mm. As indicated in figure 4, the generating lines X1 and X2 are angularly separated, relative to the central axis X10 of the corresponding bar 10, by an angle β: by providing that the sum of this angle β and two times the angle α is equal to π (pi) and that, when the device 1 is in use, the generating lines X1 and X2 of each bar 10 are positioned symmetrically relative to a plane both perpendicular to the free surface 2A of the smoke removal equipment 2 and passing through the central axis X10 of the bar, the elements 11 emit their fluid jet J11 all on a same first lateral side of the bar 10 while the elements 12 emit their fluid jet J12 all on a same second lateral side of the bar, opposite the aforementioned first lateral side. In other words, during use, along each bar 10, the jets J11 and the jets J12 emitted by the bar alternate on either side of this bar, as clearly shown in figures 1 and 4.

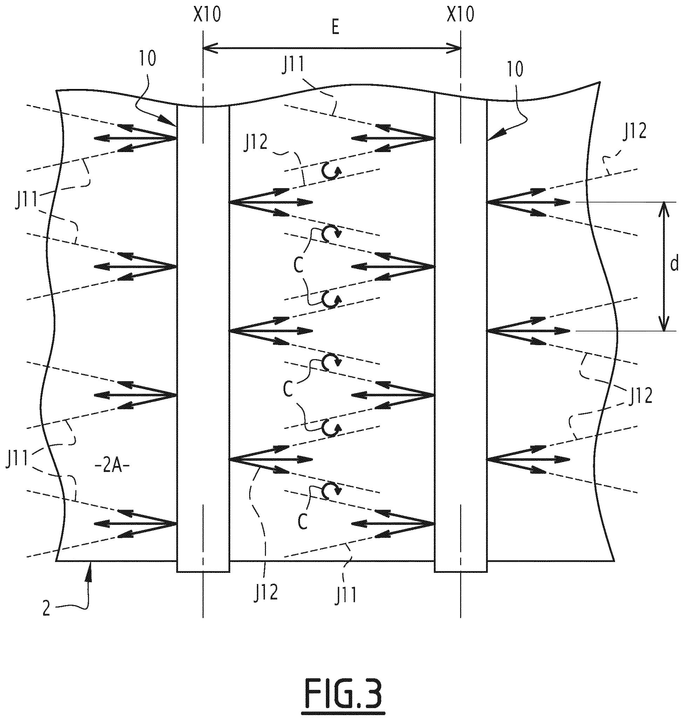

Of course, this emission of the fluid jets J11 and J12 alternating on either side of each bar 10 can be obtained by embodiments other than that described above. In any case, this arrangement is advantageously combined with the fact that, within the series of bars 10, two immediately adjacent bars 10 are arranged to prevent the fluid jets that each of them emits on its side turned toward the other bar from being aligned with one another, perpendicular to the longitudinal direction of the bars: to that end, as clearly shown in figure 3, for each pair of a first bar and a second bar that transversely follow one another in the longitudinal direction of the bars 10, each fluid jet J11 or J12 emitted by the first bar on the side of the latter turned toward the second bar is situated, in the longitudinal direction of the bars 10, substantially at the middle of two of the jets J12, or respectively J11, emitted by the second bar on the side of the latter turned toward the first bar. The interest of this aspect will appear a bit later.

During the operation of the device 1, a pressurized fluid, for example air or steam, supplies the bars 10, this supply being commanded by solenoid valves or similar command systems. The pressurized fluid brings the inner volume of the bar to a pressure much higher than the atmospheric pressure, comprised between 2 and 6 relative bars. This pressurization of the inside of the bar causes the emission of fluid jets J11 and J12 via the elements 11 and 12, these fluid jets being effective as long as the pressure inside the bar has not dropped below about 0.5 relative bars. During this activation of the bar 10, the jets J11 and J12 are emitted in the so-called "sonic" regime, typically with a speed exceeding 50 m/s.

In practice, the activation of the bars 10 of the device 1 is done periodically and preferably by pair of two immediately adjacent bars. Furthermore, the bars 10 can thus be activated both while the smoke is circulating through the smoke removal equipment 2, and without such circulation of smoke.

During the activation of each bar 10, the fluid jets J11 and J12 emitted by the bar reach the free surface 2A of the smoke removal equipment 2 with a strong tangential component relative to the plane of this free surface 2A due to the emission of these fluid jets with the angle α, which is small, but not zero, relative to this plane. The dust and other solid objects present on the free surface 2A to be cleaned are then blown laterally by these jets J11 and J12, the aforementioned strong tangential component making it possible to prevent this dust from being forced inside the smoke removal equipment 2. In the case where the smoke removal equipment 2 is a denitrification catalyst with channels, one thus avoids forcing the dust inside the channels of the catalyst; furthermore, if a heap of dust is present on an edge of one of the channels, this heap is thus prevented from collapsing and completely blocking this channel of the catalyst.

Furthermore, as illustrated in figure 2, each of the fluid jets J11 and J12 induces, by transferring quantity of movement, a rotary movement M11, M12 on the periphery of the jet strictly speaking, this rotary movement M11 or M12 having a component in the geometric plane formed by the axis Z11 and Z12 of the jet and the normal to the free surface 2A: these rotary movements M11 and M12 suspend the dust unstuck from the free surface 2A, thus facilitating the evacuation of this dust.

Additionally, when two immediately adjacent bars are activated at the same time, the fluid jets, emitted by a first of the two bars toward the second bar, and the fluid jets, emitted by the second bar toward the first bar, do not hinder one another due to the relative offset of these fluid jets in the longitudinal direction of the bars. On the contrary, they cause, by a transfer of movement quantity, rotary cells C, as shown in figure 3: each of these rotary cells C has a rotary component in the plane parallel to the free surface 2A, such that these rotary cells C also contribute to suspending the dust unstuck from the free surface 2A.

The different effects of cleaning of the free surface 2A that have been described above are applied, if applicable gradually, over this entire free surface 2A once all of the bars 10 have been activated, even if the flow of smoke is maintained through the smoke removal equipment 2.

Of course, in light of the preceding explanations, the creation of rotary cells C is only obtained if the bars 10 are activated, at least in pairs. That being said, it remains possible to activate the ramps 10 differently, for example one by one, having stressed that the benefits related to the strong tangential component of the fluid jets J11 and J12 remain.

Furthermore, according to one preferred dimensional aspect of the invention, the spacing E between two immediately adjacent bars 10, measured in a direction both substantially perpendicular to the longitudinal direction of the bars 10 and substantially parallel to the free surface 2A of the smoke removal equipment 2, is comprised between 500 and 1800 mm. With a separation E below 500 mm, the bars 10 are too close together, which affects the cost of the device 1. Conversely, when the separation E is greater than 1800 mm, the fluid jets J11 and J12 reach the free surface 2A while too weak, such that the proper cleaning of the smoke removal equipment 2 is no longer guaranteed, in particular when smoke flows through the smoke removal equipment during the activation of the cleaning device 1.

Lastly, it will be noted that during the activation of each bar 10, which is for example comprised between 1 and 30 seconds, the pressure inside the bar will gradually drop: as this pressure inside the bar drops, the strength of the fluid jets J11 and J12 emitted by this bar decreases. This results in sweeping of the free surface 2A of the smoke removal equipment 2, in that the isoforce lines of each of these fluid jets J11 and J12 intersect the free surface 2A at respective points that, as the pressure inside the bar 10 drops, move perpendicular to the longitudinal direction of the bars 10.

## Claims

1. A device (1) for cleaning smoke removal equipment (2) having a globally planar free surface (2A) and through which smoke to be cleaned flows during the use of the smoke removal equipment, this device including bars (10) for dispensing a pressurized fluid, said bars:
- extending lengthwise substantially parallel to one another, while being distributed transversely relative to their longitudinal direction, and
- are suitable for being arranged, during use, across from the free surface (2A) of the smoke removal equipment (2),
each bar being provided with elements (11, 12) that are distributed along the length of the bar and which, during use, emit fluid jets (J11, J12) that are each centered on an axis (Z11, Z12) and that are intended to clean the free surface (2A) of the smoke removal equipment (2),
**characterized in that** the bars (10) are, during use, located at a distance (D) from the free surface (2A) of the smoke removal equipment (2), which is comprised between 120 and 400 mm, and **in that** each of the elements (11, 12) is suitable for orienting its fluid jet (J11, J12) such that the axis (Z11, Z12) of the fluid jet forms an angle (α) comprised between 15 and 35° relative to the free surface (2A) of the smoke removal equipment (2).

2. The device according to claim 1, **characterized in that**, in a direction both substantially perpendicular to the longitudinal direction of the bars (10) and substantially parallel to the free surface (2A) of the smoke removal equipment (2), the bars (10) are separated from one another by a spacing (E) comprised between 500 and 1800 mm.

3. The device according to one of claims 1 or 2, **characterized in that** the elements (11, 12) of each bar (10) are designed to emit respective fluid jets (J11, J12), which, along the bar, alternate on either side of the bar.

4. The device according to claim 3, **characterized in that** the bars (10) are arranged such that, for each pair of a first bar and a second bar that transversely follow one another in the longitudinal direction of the bars, each fluid jet (J11, J12) emitted by the elements (11, 12) of the first bar on the side of this first bar turned toward the second bar, is situated, in the longitudinal direction of the bars, substantially at the middle of two of the fluid jets (J12, J11) emitted by the elements (12, 11) of the second bar on the side of this second bar turned toward the first bar.

5. The device according to one of claims 3 or 4, **characterized in that** the elements of each bar (10) are made up of:
- first elements (11) that emit respective fluid jets (J11) that are all provided on a first side of the bar, and
- second elements (12) that emit respective fluid jets (J12) that are all provided on a second side of the bar, opposite the first side of the bar,
and **in that** the first elements (11) and the second elements (12) of each bar (10) are respectively aligned on a first generating line (X1) and a second generating line (X2) of the bar, the first elements being distributed on the first generating line while being offset, in the longitudinal direction of the bar, with respect to second elements that are distributed on the second generating line.

6. The device according to claim 5, **characterized in that**, for each bar (10), the first elements (11) are separated from one another, along the first generating line (X1), by a pitch (d) that is equal to that separating the second elements (12) from one another along the second generating line (X2), and **in that** the offset between the first and second elements of each bar is equal to half of said pitch (d).

7. The device according to claim 6, **characterized in that** said pitch (d) is comprised between 250 and 600 mm.

8. The device according to any one of the preceding claims, **characterized in that** the elements (11, 12) of each bar (10) are holes delimited through a tubular wall of the bar.

9. The device according to any one of claims 1 to 7, **characterized in that** the elements of each bar (10) are tubes, such as straight tubes or Venturi tubes.

10. A method for cleaning smoke removal equipment (2), in which a free surface (2A) of the smoke removal equipment (2), which is globally planar and through which smoke to be cleaned flows during the use of the smoke removal equipment, is subjected to fluid jets (J11, J12) emitted by a device (1) that is according to any one of the preceding claims and the bars (10) of which are supplied with pressurized fluid at a pressure comprised between 2 and 6 relative bars.

11. The method according to claim 10, wherein the bars (10) of the device (1) are supplied with pressurized fluid by pairs of two bars that follow one another along the perpendicular to the longitudinal direction of the bars.

12. The method according to one of claims 10 or 11, wherein the smoke removal equipment (2) is a denitrification catalyzer.

13. The method according to one of claims 10 or 11, wherein the smoke removal equipment (2) is a heat exchanger.

## Patentansprüche

1. Vorrichtung (1) zum Reinigen einer Rauchabzugseinrichtung (2), die eine global planare freie Oberfläche (2A) aufweist und durch die zu reinigender Rauch während der Benutzung der Rauchabzugseinrichtung strömt, wobei diese Vorrichtung Stäbe (10) zur Abgabe eines unter Druck stehenden Fluids aufweist, wobei die Stäbe:
- sich in Längsrichtung im Wesentlichen parallel zueinander erstrecken, während sie quer zu ihrer Längsrichtung verteilt sind, und
- geeignet sind, während des Gebrauchs gegenüber der freien Oberfläche (2A) der Rauchabzugseinrichtung (2) angeordnet zu sein,
wobei jeder Stab mit Elementen (11, 12) versehen ist, die über die Länge der Stange verteilt sind und die während des Gebrauchs Flüssigkeitsstrahlen (J11, J12) ausstoßen, die jeweils auf einer Achse (Z11, Z12) zentriert sind und die dazu bestimmt sind, die freie Oberfläche (2A) der Rauchabzugseinrichtung (2) zu reinigen,
**dadurch gekennzeichnet, dass** die Stäbe (10) während des Gebrauchs von der freien Oberfläche (2A) der Rauchabzugseinrichtung (2) in einem Abstand (D) angeordnet sind, der zwischen 120 und 400 mm beträgt, und dass jedes der Elemente (11, 12) geeignet ist, seinen Fluidstrahl (J11, J12) so auszurichten, dass die Achse (Z11, Z12) des Fluidstrahls einen Winkel (α) bildet, der zwischen 15 und 35° relativ zur freien Oberfläche (2A) der Rauchabzugseinrichtung (2) beträgt.

2. Vorrichtung nach Anspruch 1, **dadurch gekennzeichnet, dass** in einer Richtung, die sowohl im Wesentlichen senkrecht zur Längsrichtung der Stäbe (10) als auch im Wesentlichen parallel zur freien Oberfläche (2A) der Rauchabzugseinrichtung (2) verläuft, die Stäbe (10) voneinander durch einen Abstand (E) getrennt sind, der zwischen 500 und 1800 mm beträgt.

3. Vorrichtung nach einem der Ansprüche 1 oder 2, **dadurch gekennzeichnet, dass** die Elemente (11, 12) jeder Stange (10) so ausgelegt sind, dass sie jeweils Flüssigkeitsstrahlen (J11, J12) ausstoßen, die entlang des Stabs auf beiden Seiten des Stabs abwechseln.

4. Vorrichtung nach Anspruch 3, **dadurch gekennzeichnet, dass** die Stäbe (10) so angeordnet sind, dass für jedes Paar aus einem ersten Stab und einem zweiten Stab, die quer in Längsrichtung der Stäbe aufeinander folgen, jeder Fluidstrahl (J11, J12), der von den Elementen (11, 12) des ersten Stabs auf der dem zweiten Stab zugewandten Seite dieses ersten Stabs ausgestoßen wird, in Längsrichtung der Stäbe im Wesentlichen in der Mitte von zwei der Fluidstrahlen (J12, J11), die von den Elementen (12, 11) des zweiten Stabs auf der dem ersten Stab zugewandten Seite dieses zweiten Stabs ausgestoßen werden, angeordnet ist.

5. Vorrichtung nach einem der Ansprüche 3 oder 4, **dadurch gekennzeichnet, dass** die Elemente eines jeden Stabs (10) umfassen:
- erste Elemente (11), die jeweils Flüssigkeitsstrahlen (J11) ausstoßen, die alle auf einer ersten Seite des Stabs vorgesehen sind, und
- zweite Elemente (12), die jeweils Flüssigkeitsstrahlen (J12) ausstoßen, die alle auf einer zweiten Seite des Stabs gegenüber der ersten Seite des Stabs vorgesehen sind,
und dass die ersten Elemente (11) und die zweiten Elemente (12) jedes Stabs (10) jeweils auf einer ersten Erzeugungslinie (X1) und einer zweiten Erzeugungslinie (X2) des Stabs ausgerichtet sind, wobei die ersten Elemente auf der ersten Erzeugungslinie verteilt sind, während sie in Längsrichtung des Stabs in Bezug auf zweite Elemente, die auf der zweiten Erzeugungslinie verteilt sind, versetzt sind.

6. Vorrichtung nach Anspruch 5, **dadurch gekennzeichnet, dass** für jeden Stab (10) die ersten Elemente (11) entlang der ersten Erzeugungslinie (X1) durch einen Abstand (d) voneinander getrennt sind, der gleich dem Abstand (d) ist, der die zweiten Elemente (12) entlang der zweiten Erzeugungslinie (X2) voneinander trennt, und dass der Versatz zwischen den ersten und zweiten Elementen jedes Stabs gleich der Hälfte des Abstands (d) ist.

7. Vorrichtung nach Anspruch 6, **dadurch gekennzeichnet, dass** der Abstand (d) zwischen 250 und 600 mm beträgt.

8. Vorrichtung nach einem der vorhergehenden Ansprüche, **dadurch gekennzeichnet, dass** die Elemente (11, 12) jedes Stabs (10) Löcher sind, die durch eine rohrförmige Wand der Stange begrenzt sind.

9. Vorrichtung nach einem der Ansprüche 1 bis 7, **dadurch gekennzeichnet, dass** die Elemente jedes Stabes (10) Rohre sind, wie z.B. gerade Rohre oder Venturirohre.

10. Verfahren zum Reinigen einer Rauchabzugseinrichtung (2), bei dem eine freie Oberfläche (2A) der Rauchabzugseinrichtung (2), die global planar ist und durch die während der Benutzung der Rauchabzugseinrichtung zu reinigender Rauch strömt, Fluidstrahlen (J11, J12) ausgesetzt ist, die von einer Vorrichtung (1) nach einem der vorhergehenden Ansprüche ausgestoßen werden, und deren Stäbe (10) mit unter Druck stehendem Fluid bei einem Relativdruck zwischen 2 und 6 bar versorgt werden.

11. Verfahren nach Anspruch 10, wobei die Stäbe (10) der Vorrichtung (1) durch Paare von zwei Stäben, die entlang der Senkrechten zur Längsrichtung der Stäbe aufeinander folgen, mit unter Druck stehendem Fluid versorgt werden.

12. Verfahren nach einem der Ansprüche 10 oder 11, bei dem die Rauchabzugseinrichtung (2) ein Denitrifikationskatalysator ist.

13. Verfahren nach einem der Ansprüche 10 oder 11, bei dem die Rauchabzugseinrichtung (2) ein Wärmetauscher ist.

## Revendications

1. Dispositif (1) de nettoyage d'un équipement de dépollution (2) présentant une surface libre (2A) globalement plane et au travers de laquelle des fumées à dépolluer s'écoulent lors de l'utilisation de l'équipement de dépollution, ce dispositif comportant des rampes (10) de distribution d'un fluide sous pression, lesquelles rampes :
- s'étendent en longueur de manière sensiblement parallèle les unes aux autres, en étant réparties transversalement à leur direction longitudinale, et
- sont adaptées pour, en service, être agencées en regard de la surface libre (2A) de l'équipement de dépollution (2),
chaque rampe étant pourvue d'éléments (11, 12) qui sont répartis suivant la longueur de la rampe et qui, en service, émettent des jets de fluide (J11, J12) qui sont chacun centrés sur un axe (Z11, Z12) et qui sont destinés à nettoyer la surface libre (2A) de l'équipement de dépollution (2),
**caractérisé en ce que** les rampes (10) sont, en service, situées à une distance (D) de la surface libre (2A) de l'équipement de dépollution (2), qui est comprise entre 120 et 400 mm, et **en ce que** chacun des éléments (11, 12) est adapté pour orienter son jet de fluide (J11, J12) de façon que l'axe (Z11, Z12) du jet de fluide forme un angle (a) compris entre 15 et 35° par rapport à la surface libre (2A) de l'équipement de dépollution (2).

2. Dispositif suivant la revendication 1, **caractérisé en ce que**, suivant une direction à la fois sensiblement perpendiculaire à la direction longitudinale des rampes (10) et sensiblement parallèle à la surface libre (2A) de l'équipement de dépollution (2), les rampes (10) sont séparées les unes des autres par un espacement (E) compris entre 500 et 1800 mm.

3. Dispositif suivant l'une des revendications 1 ou 2, **caractérisé en ce que** les éléments (11, 12) de chaque rampe (10) sont conçus pour émettre des jets de fluide respectifs (J11, J12) qui, le long de la rampe, alternent de part et d'autre de la rampe.

4. Dispositif suivant la revendication 3, **caractérisé en ce que** les rampes (10) sont agencées de manière que, pour chaque paire d'une première rampe et d'une seconde rampe qui se suivent transversalement à la direction longitudinale des rampes, chaque jet de fluide (J11, J12), qu'émettent les éléments (11, 12) de la première rampe sur le côté de cette première rampe tourné vers la seconde rampe, est situé, suivant la direction longitudinale des rampes, sensiblement au milieu de deux des jets de fluide (J12, J11) qu'émettent les éléments (12, 11) de la seconde rampe sur le côté de cette seconde rampe tourné vers la première rampe.

5. Dispositif suivant l'une des revendications 3 ou 4, **caractérisé en ce que** les éléments de chaque rampe (10) sont constitués :
- de premiers éléments (11) qui émettent des jets de fluide respectifs (J11) qui sont tous prévus sur un premier côté de la rampe, et
- de seconds éléments (12) qui émettent des jets de fluide respectifs (J12) qui sont tous prévus sur un second côté de la rampe, opposé au premier côté de la rampe,
et **en ce que** les premiers éléments (11) et les seconds éléments (12) de chaque rampe (10) sont alignés sur, respectivement, une première génératrice (X1) et une seconde génératrice (X2) de la rampe, les premiers éléments étant répartis sur la première génératrice en étant décalés, suivant le direction longitudinale de la rampe, vis-à-vis des seconds éléments qui sont répartis sur la seconde génératrice.

6. Dispositif suivant la revendication 5, **caractérisé en ce que**, pour chaque rampe (10), les premiers éléments (11) sont séparés les uns des autres, le long de la première génératrice (X1), par un pas (d) qui est égal à celui séparant les seconds éléments (12) les uns des autres le long de la seconde génératrice (X2), et **en ce que** le décalage entre les premiers et les seconds éléments de chaque rampe vaut la moitié dudit pas (d).

7. Dispositif suivant la revendication 6, **caractérisé en ce que** ledit pas (d) est compris entre 250 et 600 mm.

8. Dispositif suivant l'une quelconque des revendications précédentes, **caractérisé en ce que** les éléments (11, 12) de chaque rampe (10) sont des trous délimités au travers d'une paroi tubulaire de la rampe.

9. Dispositif suivant l'une quelconque des revendications 1 à 7, **caractérisé en ce que** les éléments de chaque rampe (10) sont des tubes, tels que des tubes droits ou des tubes Venturi.

10. Procédé de nettoyage d'un équipement de dépollution (2), dans lequel une surface libre (2A) de l'équipement de dépollution (2), qui est globalement plane et au travers de laquelle des fumées à dépolluer s'écoulent lors de l'utilisation de l'équipement de dépollution, est soumise à des jets de fluide (J11, J12) émis par un dispositif (1) qui est conforme à l'une quelconque des revendications précédentes et dont les rampes (10) sont alimentées en fluide sous pression à une pression comprise entre 2 et 6 bar relatifs.

11. Procédé suivant la revendication 10, dans lequel les rampes (10) du dispositif (1) sont alimentées en fluide sous pression par paire de deux rampes qui se suivent selon la perpendiculaire à la direction longitudinale des rampes.

12. Procédé suivant l'une des revendications 10 ou 11, dans lequel l'équipement de dépollution (2) est un catalyseur de dénitrification.

13. Procédé suivant l'une des revendications 10 ou 11, dans lequel l'équipement de dépollution (2) est un échangeur de chaleur.
